## Europäisches Patentamt
## European Patent Office
## Office européen des brevets

(11) Veröffentlichungsnummer: **0 134 281**
**A1**

# EUROPÄISCHE PATENTANMELDUNG

(21) Anmeldenummer: 83108479.3

(22) Anmeldetag: 29.08.83

(51) Int. Cl.⁴: **G 11 B 23/02**

(43) Veröffentlichungstag der Anmeldung:
20.03.85 Patentblatt 85/12

(84) Benannte Vertragsstaaten:
AT BE CH DE FR GB IT LI NL SE

(71) Anmelder: **idn inventions and development of novelties ag**
**Hartbertstrasse 9**
**CH-7002 Chur(CH)**

(72) Erfinder: **Ackeret, Peter**
**Allmendstrasse 18**
**CH-8700 Küsnacht(CH)**

(74) Vertreter: **Dipl.-Ing. H. Marsch Dipl.-Ing. K. Sparing**
**Dipl.-Phys.Dr. W.H. Röhl Patentanwälte**
**Rethelstrasse 123**
**D-4000 Düsseldorf(DE)**

(54) Vorrichtung zum Aufbewahren von Schall- und Bildplatten.

(57) Die Vorrichtung umfasst ein Gehäuse (100) fur eine Anzahl von Compact-Discs, die auf je einem Halter liegend mittels eines federvorgespannten und im Gehäuse (100) verriegelbaren Schiebers (102) treppenartig gestaffelt aus dem Gehäuse herausförderbar sind, so dass sie an einem Segment, das freiliegt, erfassbar und nach vorn aus dem Gehäuse (100) herausziehbar sind.- Die Halter haben ein wannenförmiges Profil, das die Discs nur in ihrem Randbereich abstützt, wo keine kratzempfindlichen Aufzeichnungsspuren vorgesehen sind.

Fig. 1

EP 0 134 281 A1

Vorrichtung zum Aufbewahren von Schall- und Bildplatten.

_____

Die Erfindung betrifft eine Vorrichtung zum Aufbewahren von Schall- oder Bildplatten mit den im Oberbegriff des Patentanspruchs 1 genannten Merkmalen. Derartige Vorrichtungen sind in der GB-A-794 216, US-A-2 760 839 und US-A-2 720 438 offenbart.

Bei der Vorrichtung nach der GB-A-794 216 sind die Halter in einem Kasten übereinander angeordnet, und unter dem letzten Halter ist eine handbetätigbare Zugplatte vorgesehen, die über einen Seilzug den darüberliegenden Halter mit herausnimmt, der seinerseits über Seilzug den nächste mitnimmt, und so weiter.

Die Vorrichtung gemäss US-A-270 839 ist ähnlich aufgebaut, doch sind alle Halter mit einem gemeinsamen, als Entnahmeorgan dienenden, manuell herausziehbaren Stab gekuppelt, wobei je nach dem unterschiedlichen Auszugshub der Halter unterschiedliche Leerwege vorgesehen sind. - Bei der Vorrichtung gemäss US-A-2 720 438 wird die Ausschiebebewegung mittels eines Hebelgestänges auf die die Platten enthaltenden Papierhüllen übertragen.

Da es bereits Abspielgeräte für Kleinstschallplatten, sogenannte "Compactdiscs", gibt, die zum Einbau in Kraftfahrzeuge bestimmt und geeignet sind, besteht auch ein Bedürfnis für ein Plattenarchiv, das den Anwendungsbedingungen in Kraftfahrzeugen genügt. Diese Bedingungen umfassen primär die einfache Bedienbarkeit, um den Fahrzeuglenker nicht abzulenken, und die Möglichkeit, je nach der Gestaltung des Fahrzeuginnenraums das Archiv mit waagerecht liegenden Platten als auch so einbauen zu können, dass die Platten senkrecht aufwärts aus dem Gehäuse herausbefördert werden.

Diesen Anforderungen sind die bekannten Vorrichtungen ersichtlich nicht gewachsen. Die erstgenannte Vorrichtung ist nicht verwendbar, wenn die Platten senkrecht hochgefördert werden müssen, weil der Benutzer mit der einen Hand die Zugplatte halten müsste, während er mit der andern Hand eine Platte austauscht. Dies gilt analog auch für die zweite oben erwähnte bekannte Vorrichtung. Die dritte bekannte Vorrichtung ist insofern günstiger, als durch das kniehebelartig ausgebildete Gestänge der aus dem Gehäuse herausgeförderte Stapel in seiner Lage verbleibt; gleichwohl muss der Benutzer relativ komplizierte Bewegungen ausführen, und die Platten sind teilweise, insbesondere beim Einbau in waagerechter Lage, schlecht zugänglich.

Aufgabe der Erfindung ist es, die bekannte Vorrichtung dahingehend weiterzubilden, dass sie als problemlos auch vom Lenker eines Fahrzeugs bedienbares, in den genannten Einbaulagen funktionsfähiges Archiv einsetzbar ist.

Diese Aufgabe wird durch die im kennzeichnenden Teil des Patentanspruchs 1 genannten Merkmale gelöst. Der Benutzer kann mit einem blind ausführbaren Griff, zum Beispiel einem Tastendruck, das System entriegeln, und der Wiedereinschub ist ebenso einfach. Versieht man die offene Gehäusefrontseite mit einer Abdeckung, etwa in Form einer Frontwand eines im Gehäuse beweglich geführten Schiebers, so kann man dieses Auslöseorgan auf dieser Frontwand anbringen, was platzsparende Ausführungen ergibt.

Weitere zweckmässige und bevorzugte Einzelheiten sind in den Unteransprüchen definiert.

Ausführungsbeispiele des Gegenstandes der Erfindung werden nachstehend unter Bezugnahme auf die beigefügten Zeichnungen im einzelnen erläutert.

Fig. 1 stellt im Vertikalschnitt, weitgehend schematisiert, eine erste erfindungsgemässe Vorrichtung dar,

Fig. 2 ist eine Teilschnitt-Frontansicht der Vorrichtung nach Fig. 1,

Fig. 3 ist eine Draufsicht auf eine Vorrichtung gemäss Fig. 1 und 2 in der Entnahmeposition,

Fig. 4 zeigt schematisch eine Variante der Verbindung zwischen Schieber und Frontwand,

Fig. 5 stellt in schematisierter Schnittansicht eine zweite Ausführungsform dar,

Fig. 6 ist ein schematischer Horizontalschnitt zu Fig. 5, und

Fig. 7 bis 10 zeigen weitgehend schematisiert weitere Varianten der Verbindung zwischen Schieber und Frontwand, und

Fig. 11 und 12 dienen der Erläuterung einer für die Ausführungsbeispiele geeigneten Verriegelungsvorrichtung.

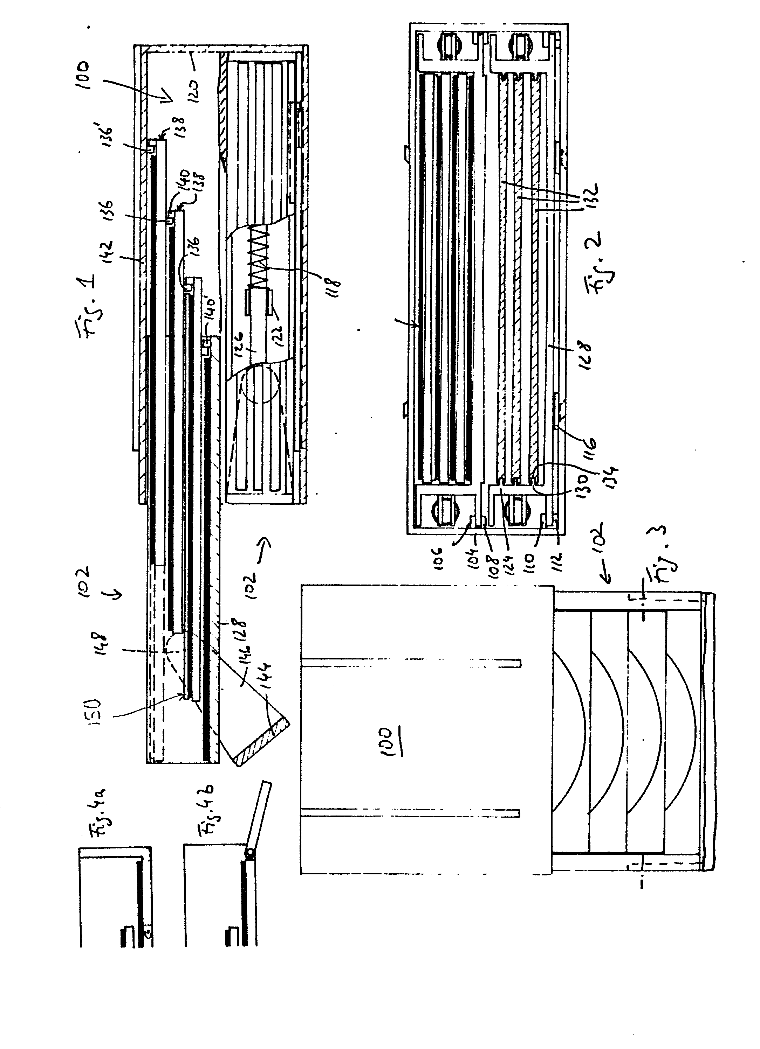

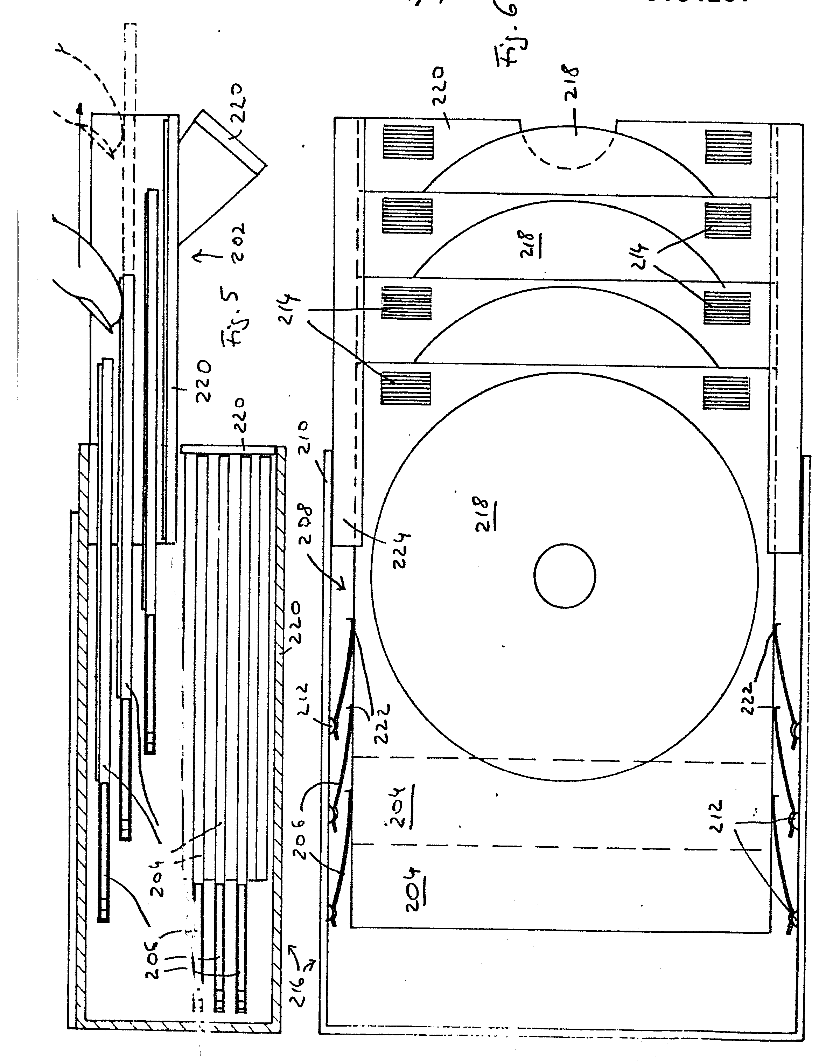

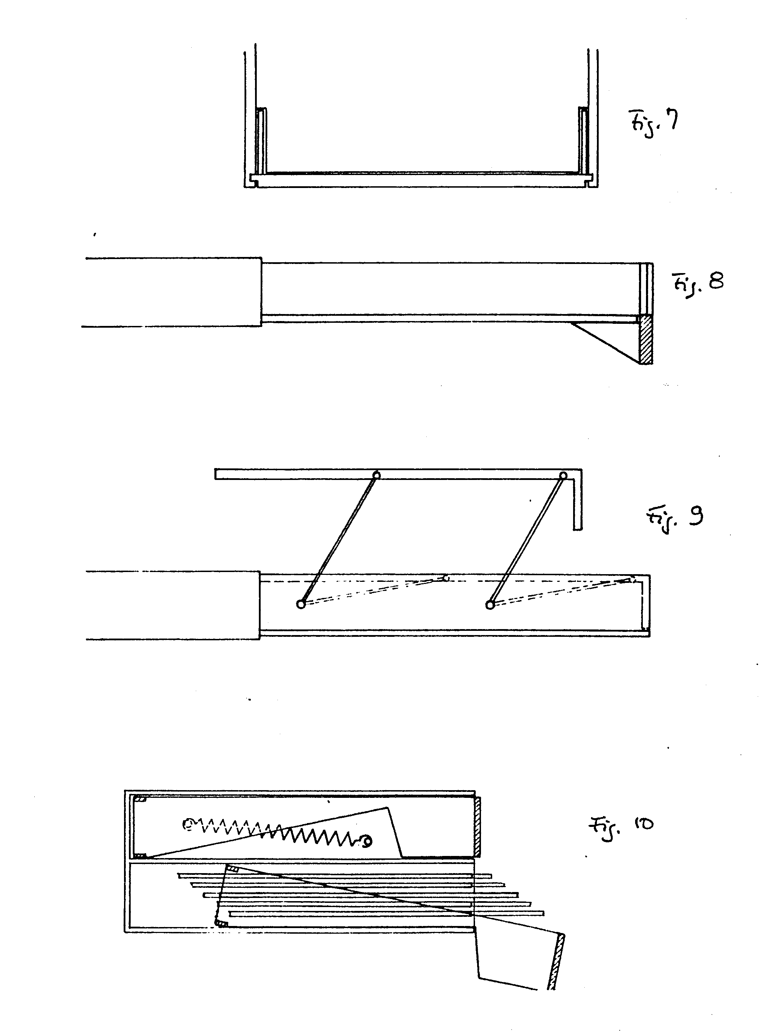

Die Ausführungsform nach Figuren 1 bis 3 umfasst ein Gehäuse 100 für zwei Schieber 102, die übereinander im Gehäuse liegen. Das Gehäuse weist auf seiner Oberseite hinterschnittene Stege und auf seiner Unterseite zu diesen komplementär ausgebildete Nuten auf, so dass das Gehäuse mit weiteren gleichartigen Gehäusen formschlüssig verbunden werden kann. Im übrigen besitzt das Gehäuse eine quaderförmige Grundform.

An die vertikalen Seitenwände 104 des Gehäuses sind Führungsschienen 106, 108 für den oberen Schieber, 110 und 112 für den unteren Schieber angeformt. Der untere Schieber sitzt nicht direkt auf dem Gehäuseboden 114 auf, sondern auf stegartigen Verdickungen 116, unter denen sich die erwähnten Nuten befinden.

Zu jedem Schieber 102 gehört ein Paar von Ausschubfedern 118, die als Schraubendruckfedern ausgebildet sind und sich einerseits an der Gehäuserückwand 120, andererseits an Vorsprüngen 122 abstützen, die auf der den Gehäuseseitenwänden 104 zugekehrten Streben 124 der Schieber angeformt sind. Stützleisten, die ein Ausknicken der Federn verhindern, sind in Fig. 1 bei 126 angedeutet.

Die beiden Streben 124 jedes Schiebers sind durch eine Bodenplatte 128 miteinander verbunden, und auf der den Seitenwänden 104 des Gehäuses abgewandten Innenseiten der Streben 124 sind Führungsschienen 130 für drei Disc-Halter 132 angeformt. Jeder Disc-Halter besitzt zu den Führungsschienen 130 komplementäre Führungsrinnen 134 sowie auf seiner Unterseite eine Kralle 136, die um eine gewisse Strecke von der inneren Endkante 138 des Halters aus nach vorn versetzt ist; diese Strecke definiert die Hubdifferenz von benachbarten Haltern beim Ausschub. Im Bereich der Endkante 138 befindet sich ein Mitnehmer 140, der kongruent zur Kralle des jeweils darüberliegenden Halters (gesehen in Ausschubrichtung) angeformt ist; für den obersten Halter ist eine entsprechende Kralle 136´an die Unterseite der Gehäusedeckwandung 142 angeformt. Krallen und Mitnehmer können, müssen aber nicht sich über die ganze Halterbreite erstrecken. Für den untersten Halter ist ein Mitnehmer 140˜ an die

- 5 -

0134281

Schieberbodenplatte 128 angeformt, und in der Tat hat der Schieber hier zugleich die Funktion eines der Halter. - Auf seiner Frontseite weist der Schieber eine Frontplatte 144 auf, die mittels Wangen 146 seitlich am Schieber angelenkt ist; in dem Gelenk 148 kann eine Drehfeder eingebaut sein, die die Frontplatte nach Entriegeln des Schiebers in die in Fig. 1 angedeutete Oeffnungsposition verschwenkt, so dass die Discs nach vorn herausziehbar sind. Bei verriegeltem Schieber deckt die Frontplatte die Gehäuseöffnung ab.

Man erkennt in Fig. 2, dass die Halter auf ihrer Ober- und Unterseite ein sehr flach wannenförmiges Profil besitzen. Dies hat zur Folge, dass beim Einlegen oder Entnehmen einer Disc diese niemals mittig, sondern immer nur am Rand in Berührung mit einem Halter kommen kann und deshalb die Ton- oder Bildspuren auf den Discs nicht beschädigt werden.

Jeder Schieber 102 weist noch einen in seine Bodenplatte eingebauten Verriegelungsmechanismus auf, der später unter Bezugnahme auf Fig. 22 bis 25 erläutert wird.

Nach Entriegeln des Schiebers wird er von den Federn 118 längs seinen Führungen nach aussen geschoben, wobei er den ihm nächstliegenden Halter über den Eingriff Mitnehmer 140´- 136 nach Durchlaufen einer Leerstrecke mitnimmt; in entsprechender Weise nimmt jeder Halter den unmittelbar darüberliegenden seinerseits mit, bis der oberste Halter sich mit seinem Mitnehmer 142 auf der gehäuseseitigen Kralle 136´auflaufend einem weiteren Ausschub widersetzt.- Beim Wiedereinschub drückt die Frontplatte die Halter nacheinander wieder in das Gehäuse zurück.

In Fig. 1 und 2 ist angedeutet, dass oberhalb der eingelegten Discs noch Platz für das üblicherweise beim Kauf solcher Compactdiscs mitgelieferte Begleitbüchlein 150 Platz bleibt.

- 6 -

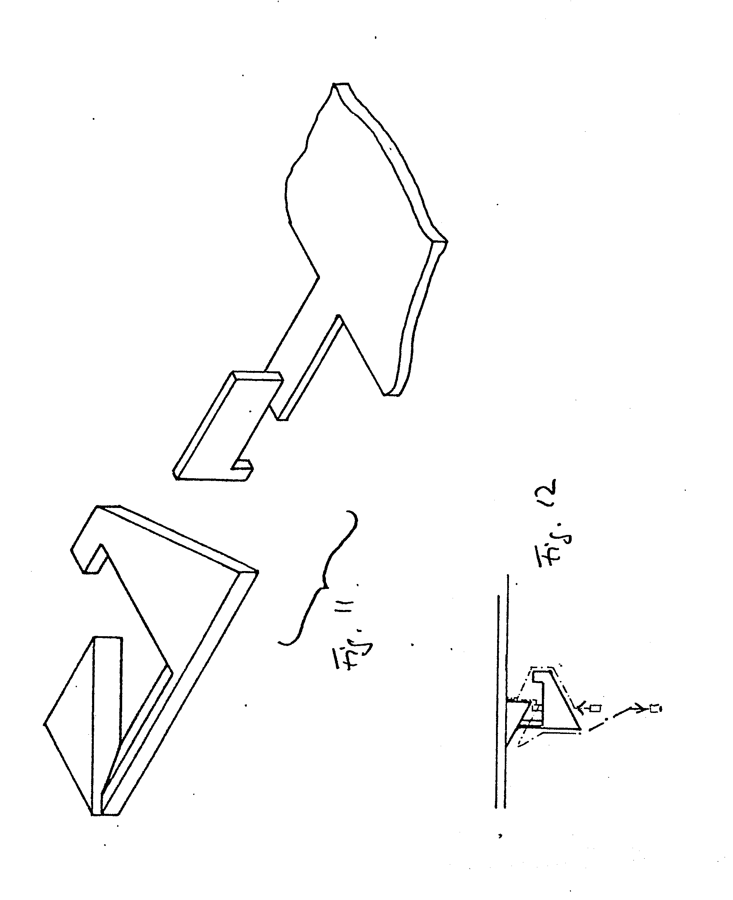

Bei der Erläuterung der zweiten Ausführungsform kann hinsichtlich der meisten Komponenten auf Fig. 1 bis 3 verwiesen werden, und insoweit ist die Darstellung der Fig. 5 und 6 sehr weitgehend vereinfacht.

Unterschiedlich gegenüber der ersten Ausführungsform ist, dass die einzelnen Platten- oder Disc-Halter mit Ausnahme des untersten, vom Boden 200 des Schiebers 202 verkörperten Halters in der Entnahmeposition nicht unmittelbar auf Anschläge auflaufen, wie sie im ersten Ausführungsbeispiel durch die Kette 136'-140-136...136-140' gebildet wurden, sondern reibungsschlüssig gehalten sind. Hierfür sind an den Seitenkanten der einzelnen Halter 204 Blattfedern 206 angebracht, die in der Einschubposition (Fig. 5, unterer Teil) frei in den Raum 208 ragen, der bis zu den Gehäuseseitenwandungen 210 ausgespart ist. An diese sind jedoch, gestaffelt entsprechend dem für jeden Halter vorgesehenen "ersten" Hub, Nocken 212 angeformt, über die die freien Blattfederenden etwas ausgelenkt werden und dann mit einer komplementären Einbuchtung aufsitzen; die dadurch erzeugte Bremskraft reicht aus, den jeweiligen Halter bei weiterem Ausschub des Schiebers festzuhalten. Auf der Oberseite weisen die Platten in den von der Disc nicht eingenommenen Ecken aufgerauhte, etwa geriffelte Bereiche 214 auf, die es ermöglichen, mit einem Finger (Fig. 5, oben) den jeweiligen Halter aus dem Gehäuse 216 weiter herauszuziehen, wobei die zugeordneten Blattfedern von den Nocken 212 abspringen. Die einzelnen Discs 218 sind so noch besser zugänglich.- Beim Wiedereinschub werden wieder alle Halter 204 unter überspringen der Nocken von der hochgeklappten Frontwand 220 mitgenommen. Die halterseitigen Federenden 222 stehen geringfügig nach aussen vor und begrenzen den Maximalauszug der Halter durch Auflaufen auf das gehäuseinnere Ende der Schieberführungsholme 224.

Anstatt, wie in Fig. 1-3 oder 5 und 6 vorgesehen, die Schieberfrontwand über seitliche Wangen an die Seitenholme des Schiebers anzulenken, kann man auch die Frontwand um eine in der Ebene des Schieberbodens 300 (Fig. 4) verlaufende Achse klappbar ausbilden; in Fig. 4a ist die Frontwand 302 zusammen mit einem Teilabschnitt der Bodenwandung winkelförmig ausgebildet, während in Fig. 4b die Frontwand 304 einfach plattenförmig ist und ihre Klappachse im Bereich der äusseren Endkante des Schieberbodens liegt.

Weitere Varianten sind in Fig. 7 bis 10 dargestellt, wobei diese Zeichnungen nur schematisch den Aufbau andeuten und nur in Fig. 10 die Disc-Halter symbolisiert sind; insoweit kann auf die ausführlich beschriebenen Ausführungsbeispiele verwiesen werden.

Gemäss Fig. 7 und 8 ist im Schieber 400 eine Frontwand 402 quer zur Erstreckung des Schieberbodens nach unten gleitbeweglich. Die Frontwand ist in den Schieberseitenholmen 404 mittels Rippen 406 geführt und weist rechtwinklig sich zum Gehäuse 408 erstreckende Keilabschnitte auf, die durch Schlitze 410 des Schieberbodens 412 treten, wenn die Keilkanten 414 auf die Gehäusekante 416 auflaufend die Frontwand in die Abdeckposition heben.

Fig. 9 ist eine Ausführungsform, bei der die Frontwand über zwei Parallelogrammlenker 420 an die Schieberseitenholme angelenkt ist; die Frontwand 422 bildet hier mit einer Deckplatte 424 eine winkelförmige Baugruppe.

Gemäss Fig. 10 ist der Schieber 430 im wesentlichen rahmenförmig mit zwei Seitenholmen 432, die einerseits durch die Frontwand 434, andererseits durch gehäuseinnenseitige Traversen 436 miteinander verbunden sind und etwa dreieckförmige Ausschnitte 438 aufweisen, die es ermöglichen, dass der von Zugfedern 440 aus dem Gehäuse heraustransportierte Schieber nach unten schwenkt — das nötige Drehmoment bringen ebenfalls die seitlich angreifenden Zugfedern auf — und somit die Disc-Halter 444 von vorn zugänglich macht.

Die Fig. 11 und 12 dienen der Erläuterung eines bevorzugten Verriegelungsmechanismus. An das gehäuseinnenseitige Ende einer Schieberbodenplatte 500 ist ein Federorgan 502 angeformt, bestehend aus einer senkrecht zur Ebene des Schieberbodens auslenkbaren ersten Blattfeder 504, verlängert um eine zweite, senkrecht zur ersten auslenkbare Blattfeder 506. An deren freiem Ende ist eine Kralle 508 angeformt, die sich nach unten über die Unterseite des Schieberbodens hinauserstreckt.

An dem zum Schieberboden parallel verlaufenden Gehäuseboden ist eine Steuerkulisse 510 angeformt, deren Aufbau im Zusammenhang mit ihrem Zusammenwirken mit dem Federorgan erläutert wird.

Beim Einschub des Schiebers in Pfeilrichtung 512 trifft die Kralle 508 auf die erste Steuerfläche 514 der Kulisse und wird längs dieser ausgelenkt, wobei die zweite Blattfeder deformiert wird. Die Kralle gleitet dann längs der Kulissenkante 516 und springt dann in ihre Ausgangsstellung zurück, wobei die zweite Blattfeder entspannt wird. Der von der Ausschubfederanordnung vorgespannte Schieber wird losgelassen, und die Kralle verriegelt sich an der Rastkante 518: Der Schieber ist verriegelt. Drückt man erneut auf den Schieber, trifft die Kralle auf eine zweite Steuerfläche 520 der Kulisse und wird unter erneuter Deformation der zweiten Blattfeder, jetzt nach der andern Seite, seitlich ausgelenkt; zugleich muss aber die Kralle längs einer dritten, als Rampe ausgebildeten Steuerfläche 522 der Kulisse hochgleiten, was durch elastische Deformation der ersten Blattfeder 504 ermöglicht wird. Am Ende der Rampe springt die Kralle wieder herunter (die erste Blattfeder entspannt sich dabei), und der Schieber kann ausgestossen werden; wenn die Kralle 508 die Endkante 524 der Kulisse erreicht hat, kann sich auch die zweite Blattfeder entspannen, und der Ausgangszustand ist erreicht.- Es ist zu beachten, dass weder in der Einschub- noch in der Entnahmeposition eine der Blattfedern deformiert ist, so dass man zu Kaltfluss neigenden Kunststoff als Material verwenden darf.

Patentansprüche

1)      Vorrichtung zum Aufbewahren von Schall- und Bildplatten mit einem Gehäuse, in dem plattenartige Halter für je eine unterzubringende Platte gleitbeweglich gelagert sind und mit einer Entnahmevorrichtung, mittels der alle Halter gemeinsam, jedoch um von Halter zu Halter zunehmenden Hub aus dem Gehäuse herausförderbar sind, wodurch in der so erzielten Entnahmeposition alle Platten an einem Segment für die Entnahme erfassbar sind, dadurch gekennzeichnet, dass die Entnahmevorrichtung mindestens ein gegen Federvorspannung im Gehäuse verriegelbares und von der Gehäusefrontseite, wo die Halter herausförderbar sind, her manuell auslösbares Transportorgan umfasst.

2)      Vorrichtung nach Anspruch 1, dadurch gekennzeichnet, dass eine Abdeckung für die Gehäusefrontseite vorgesehen ist.

3)      Vorrichtung nach Anspruch 2, dadurch gekennzeichnet, dass das Transportorgan ebenfalls aus dem Gehäuse herausförderbar ist und eine die Abdeckung bildende Frontwand aufweist.

4)      Vorrichtung nach Anspruch 3, dadurch gekennzeichnet, dass das Transportorgan und die Frontwand derart beweglich miteinander verbunden sind, dass die Frontwand in der Entnahmeposition die Plattenentnahmewege freigibt.

5)      Vorrichtung nach Anspruch 3, dadurch gekennzeichnet, dass die Frontwand ein gleitbeweglich im Gehäuse geführter Schieber ist.

6)      Vorrichtung nach Anspruch 4 und 5, dadurch gekennzeichnet, dass die Frontwand an den Schieber angelenkt ist.

7)      Vorrichtung nach Anspruch 4 und 5, dadurch gekennzeichnet, dass die Frontwand quer zur Schieberbewegungsrichtung an diesem gleitbeweglich geführt ist.

8)      Vorrichtung nach Anspruch 4 und 5, dadurch gekennzeichnet, dass der Schieber rahmenartig ausgebildet ist und um eine nahe seinem gehäuseinneren Ende sich parallel zur Frontwand erstreckende Achse in der Entnahmeposition verschwenkt ist.

9)      Vorrichtung nach Anspruch 1, dadurch gekennzeichnet, dass die Halter ein die Platten nur an ihrem aufzeichnungsspurfreien Rand abstützendes Profil aufweisen.

10)      Vorrichtung nach Anspruch 9, gekennzeichnet durch ein wannenförmiges Profil der Halter.

11)      Vorrichtung nach Anspruch 10, dadurch gekennzeichnet, dass die Halter auch auf ihrer der Platte abgewandten Seite ein wannenförmiges Profil aufweisen.

12)      Vorrichtung nach Anspruch 5, dadurch gekennzeichnet, dass der Schieber einen plattenförmigen Boden aufweist.

13)      Vorrichtung nach Anspruch 12, dadurch gekennzeichnet, dass der Schieberboden als Halter ausgebildet ist.

14)      Vorrichtung nach Anspruch 1, dadurch gekennzeichnet, dass die Halter in der Entnahmeposition relativ zueinander treppenartig liegen.

15)      Vorrichtung nach Anspruch 14, dadurch gekennzeichnet, dass der unterste Halter bis zu einem Festanschlag aus dem Gehäuse herausförderbar ist und die anderen in der Entnahmeposition reibungsschlüssig gehalten sind, aus welcher Position sie   . weiter aus dem Gehäuse herausförderbar sind.

16)    Vorrichtung nach Anspruch 5, gekennzeichnet durch eine Verriegelungsanordnung, die durch Einschub des Schiebers aus der Entnahmeposition selbsttätig verriegelt und bei Druck auf die Frontwand im verriegelten Zustand wieder entriegelt.

0134281

Fig. 1

Fig. 2

Fig. 3

Fig. 4a

Fig. 4b

Fig. 5

Fig. 6

2/4

0134281

0134281

Fig. 7

Fig. 8

Fig. 9

Fig. 10

0134281

Fig. 11

Fig. 12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | GB-A- 794 216 (J.M.L. BOREL)<br>* Seite 2, Zeilen 26-87; Figuren 6, 8 *<br><br>--- | 1 | G 11 B  23/02 |
| D,A | US-A-2 720 438 (J.C. MUSICK)<br><br>--- | 1 | |
| A | FR-A-1 226 682 (STE DES ANCIENS ETS A. MATTEY)<br><br>----- | | |

| RECHERCHIERTE SACHGEBIETE (Int. Cl. ³) |
|---|
| G 11 B    1/02<br>G 11 B  23/00 |

Der vorliegende Recherchenbericht wurde für alle Patentansprüche erstellt.

| Recherchenort<br>BERLIN | Abschlußdatum der Recherche<br>26-03-1984 | Prüfer<br>ROGNONI M.G.L. |
|---|---|---|